# EUROPEAN PATENT APPLICATION

(11) **EP 1 645 476 A1**
(43) Date of publication of application: **12.04.2006**
(21) Application number: 05077226.8
(22) Date of filing: 29.09.2005
(51) Int. Cl.: B60R 19/18, B60R 19/24, B29C 45/26

(54) **Energy absorbing bumper**

(30) Priority: 05.10.2004 US 616008 P; 02.06.2005 US 143002
(71) Applicant: TRANSPEC, INC., Sterling Heights, Michigan 48312 (US)
(72) Inventor: Lamparter, Ronald C., Grosse point shores, Michigan 48236 (US)
(74) Representative: Houben, Christiaan Hein Willem Frans

(57) **Abstract**

An energy absorbing bumper (8) has a support structure (16), brackets (12) for attaching the support structure to a bus or commercial vehicle or the like, a facia (9) attached to the support structure, and an energy absorbing structure (28) disposed between the support structure and the facia. The facia has significant variations in size, shape, and other aspects relating to styling and appearance.

## Description

### Background of the Invention

The invention relates to an energy absorbing bumper.

Energy absorbing bumpers have been used on all types of vehicles for many years; and there are a number of patents relating to energy absorbing vehicle bumpers. For instance, see U.S. Patent 4,509,782 granted to Donald L. Manning April 9, 1985; U.S. Patent 4,597,601 granted to Donald L. Manning July 1, 1986; U.S. Patent 4,715,630 granted to Donald L. Manning December 29, 1987; U.S. Patent 4,733,894 granted to Ronald C. Lamparter March 29, 1988; and U.S. Patent 4,925,224 granted to James J. Smiszek May 15, 1990.

Energy absorbing bumpers used on vehicles produced in relatively high volumes, such as passenger cars and light trucks, are typically custom designed for a specific vehicle; which allows for bumper appearance to also be custom designed to follow the specific shape and styling of a specific vehicle. The higher production volumes of these vehicles enable these custom bumper designs to be economically feasible.

Most commercial vehicles, such as buses and heavier-duty truck and vans, are produced in much lower volumes; and production economics dictate that energy absorbing bumpers used on these vehicles be essentially "standard designs," produced by supplier companies that are able to sell the same bumper design to many different commercial vehicle manufacturers.

The result, of course, is that the energy absorbing bumpers used on many different commercial vehicles, produced by many different vehicle manufacturers, appear essentially the same; which severely restricts the styling of these vehicles because the shape of the vehicle must somewhat follow the shape of the bumper rather than the bumper simply following the shape of the vehicle.

Another problem with energy absorbing bumpers currently used on commercial vehicles relates to both the time and expense required to make repairs. Commercial vehicles are typically exposed to much more severe service conditions than passenger cars; and the bumpers used on commercial vehicles are subject to frequent damage, repairs to which require either complete disassembly of the entire bumper system, often resulting in labor cost that exceeds the cost of simply replacing the entire bumper, or replacement of the entire bumper that results in replacement of components that have no damage whatsoever.

### Summary of the Invention

This invention provides a unique bumper assembly having a "standardized modular design platform" for the basic support structure and energy absorbing portion of the bumpers used on commercial vehicles; while a facia simultaneously allows for significant variations of overall length, overall height, and visual shape and other aspects pertaining to appearance and styling of the bumper.

This invention also provides for fast and easy replacement of the bumper fascia, which is the portion of the bumper most frequently subject to damage, without any need to dismount or disassemble the entire bumper.

The back-up support structure and the bumper mounting structure, as well as the energy absorbing structure, may be standardized to fulfill the requirements of most commercial vehicles, which creates maximum economies of scale; while the external fascia that simply covers all the other structure may be produced from specially designed tooling that accommodates significant variations in size, shape, and other aspects relating to styling and appearance, without a need to completely re-design and re-tool each variation.

The combination of support structure, energy absorbing structure, and external fascia also allows for fast, easy replacement of the less expensive fascia, which is the component most often subject to damage, without having to remove or replace the more expensive support and energy absorbing structures, which are damaged much less frequently.

Federal Motor Vehicle Safety Standards (FMVSS) restrict overall width of most commercial vehicles to maximum of 102 inches including the width of bumper. Consequently, the standardized design platform of this invention is preferably based on a modular system of standardized components, all based on this maximum width, which are either cut-to-length for specific vehicle widths less than 102 inches or produced from special tooling with custom inserts that allows cost-efficient production of components for bumpers less than 102 inches in overall length.

The back-up support structure for the standardized design platform can be produced of extruded aluminum, or pultruded fiberglass reinforced plastic resin, in a standardized shape, and preferably a length of 102 inches. For bumpers less than 102 inches in length, the extrusion/pultrusion can simply be cut-to-length as needed. Alternatively, the back-up support structure can be produced in very long pieces with the required lengths for a particular bumper design simply cut from the long pieces.

Similarly, the energy absorbing foam structure for the standardized design platform would preferably be produced in standardized shapes and half bumper lengths of 51 inches. For bumpers less than 102 inches in length, the foam structures can simply be cut-to-length as needed. Even though the energy absorbing foam structure is standardized in shape, the density of the foam can be varied so as to accommodate the requirements of a variety of buses and other commercial vehicles that have different weights and configurations.

The mounting brackets for the standardized design platform can be produced as sections cut from linear aluminum extrusion, or as individual aluminum castings, and are preferably designed to slide freely along the full length of the extruded/pultruded back-up structure. This allows for total flexibility as to location of brackets required to mount the bumper onto a specific vehicle.

The primary remaining component for a complete bumper system is the exterior fascia that covers all the other components, and provides abrasion protection to the energy absorbing foam structure, and also provides the visual shape and exterior styling appearance of the bumper. This fascia can be produced by various processes, including conventional injection molding, reaction injection molding, or possibly even blow molding, or twin-sheet thermo-forming. These fascias are preferably produced in half sections in a specially designed mold or tool that is designed to produce fascias in half lengths of 51 inches, but with a provision for special inserts in the mold or tool that allows cost-efficient production of virtually any other length less than 51 inches.

The facias are also preferably produced in a specially design mold or tool that incorporates provisions for inserts that enable cost-efficient production of design skirts on the upper surface, the lower surface, or both surfaces of the primary central shape of the bumper. Such a mold or tool enables production of bumper fascias custom designed to fit the precise shape and contours of virtually any commercial vehicle without a need to totally re-tool the entire facia.

Attaching the facia into the bumper assembly can be facilitated with a bar or strip of metal with a series of pins that can be made from a aluminum extrusion with solid aluminum rivets extending from the flat surface of the metal strip. These pins can fit into a matching series of holes in portions of the facia disposed between flanges of a support structure, sandwiching the facia securely in place. The metal strip can be held in place with one or two light weight fasteners since the attachment does not require any clamping pressure or an ability to withstand impact forces.

### Brief Description of the Drawings

Figure 1 is a perspective front view of a bumper in accordance with the invention;
Figure 2 is a perspective rear view of the bumper shown in figure1;
Figure 3 is a perspective rear sectional view of the bumper shown in figure 1 with the section being taken through one of the mounting brackets;
Figure 4 is a perspective front view of the bumper shown in figure 1 with parts removed to show construction detail;
Figure 5 is a sectional view of the bumper shown in figure 1 with the section being taken through one of the mounting brackets;
Figures 6 and 6A are front and rear perspective views of one of the mounting brackets;
Figures 7 and 8 are cross sections of the bumper taken through the middle of the bumper and one of the brackets respectively; and
Figure 9 is a partial, exploded, perspective front view of the bumper shown in figure 1 ;
Figure 10 is a perspective front view of the bumper shown in figure 1 with the design skirt removed to show attachment details; and
Figure 11 is a schematic drawing or tooling for the making the facia.

### Detailed Description of Preferred Embodiment

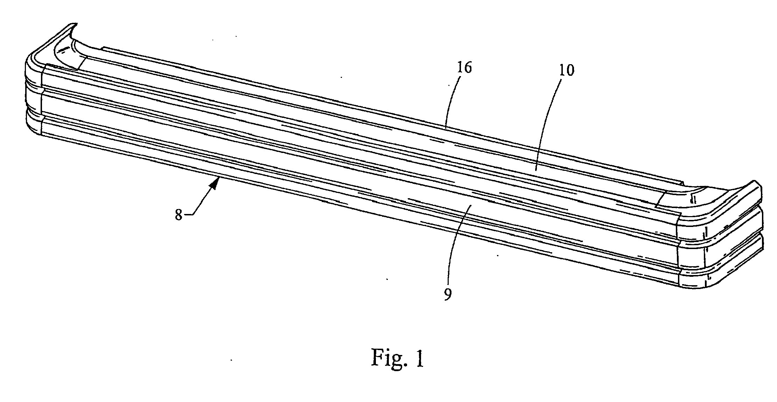

Figure 1 which is a perspective front view of a bumper in accordance with the invention, illustrates a bumper 8 that has a facia 9 that includes a design skirt 10 that is produced in a large, infinite-like variety of shapes with inserts in a master tool described below.

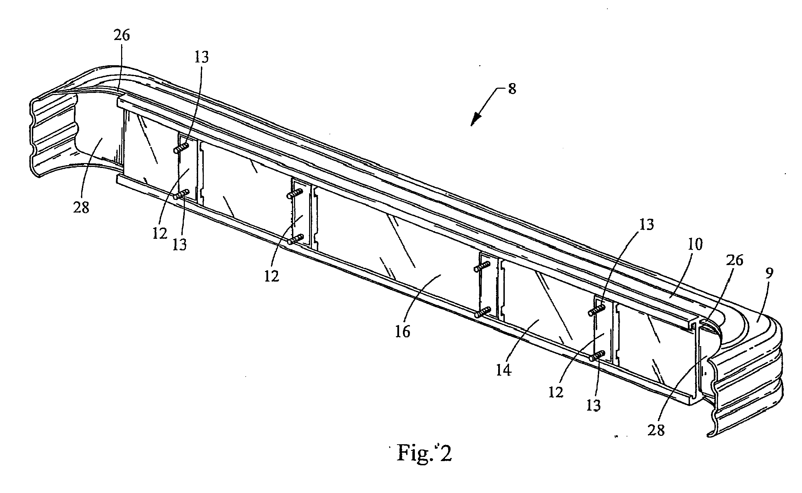

Figure 2 which is a perspective rear view of the bumper 8 shown in figure 1 illustrates bumper 8 as having a plurality of brackets 12 that slide freely along a back surface 14 of a support structure 16. Brackets 12 clamp onto the support structure 16 when the bumper is mounted to a bus or other commercial vehicle (not shown) by bolts 13 that are tightened down by nuts (not shown).

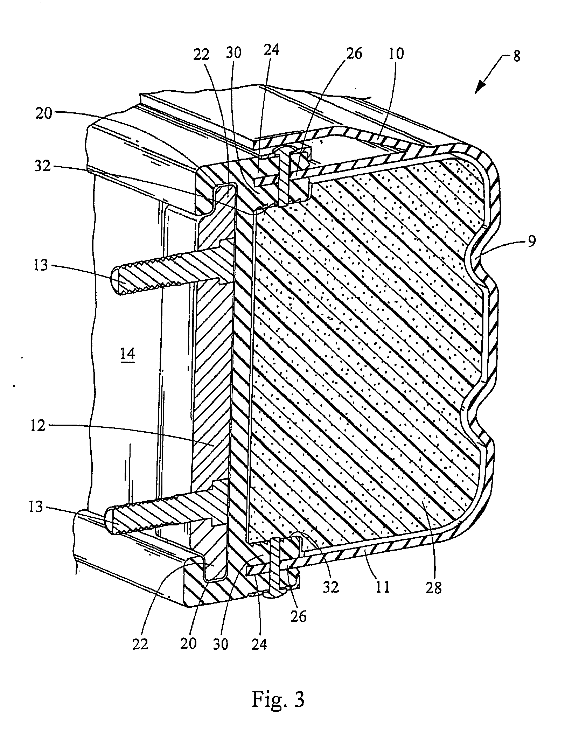

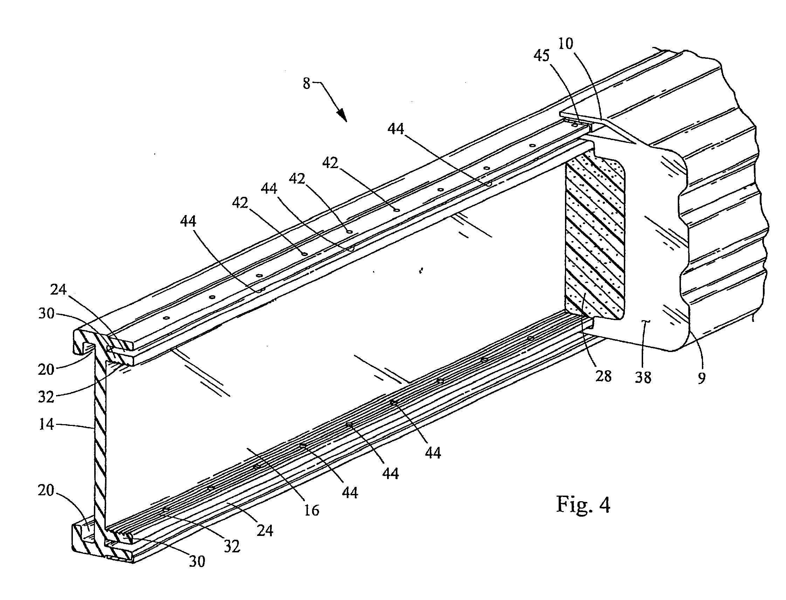

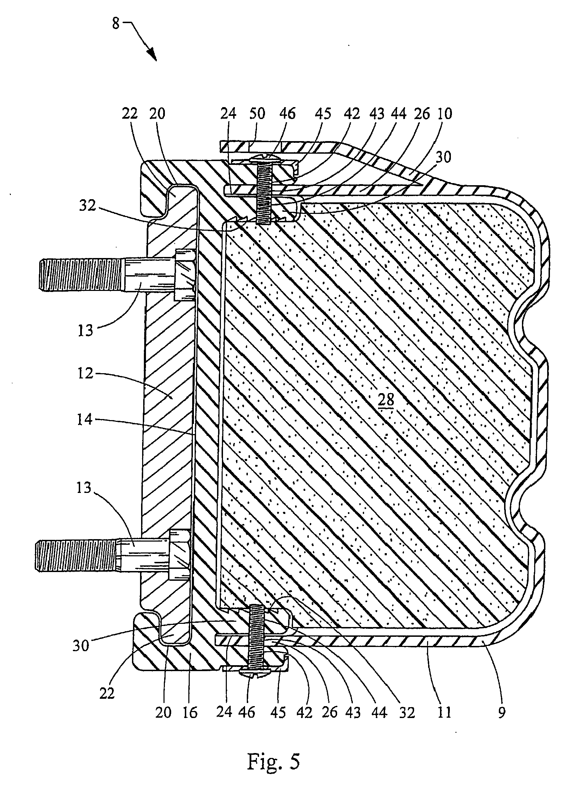

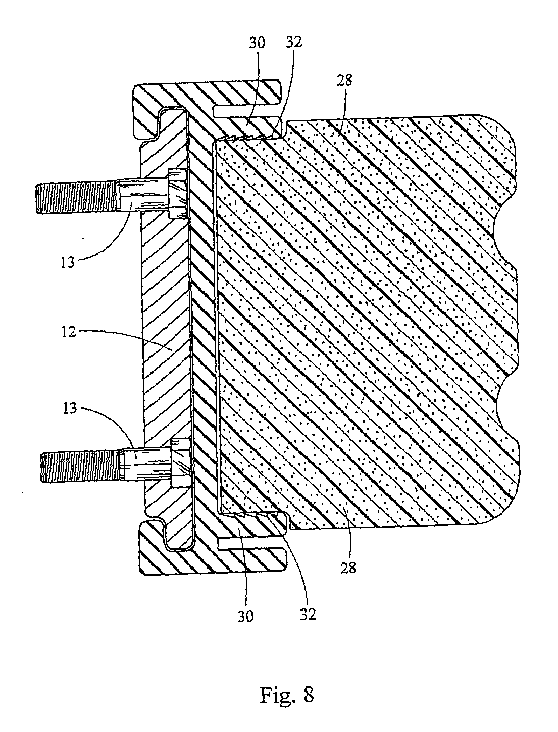

Figure 3 is a perspective rear sectional view of the bumper 8 shown in figure 2 with the section being taken through one of the mounting brackets 12. Support structure 16 has vertically spaced, vertically oriented, parallel slots 20 that receive outer edge portions 22 of the brackets 12 so that the brackets 12 slide freely along the back surface 14 of the support structure 16 before bumper 8 is attached to a bus or other commercial vehicle (not shown) and brackets 16 clamp onto the support structure 16. Support structure 16 also has vertically spaced, horizontally oriented parallel channels 24 that receive rearward end portions 26 of bumper facia 9. As indicated above, the bumper facia 9 is preferably standardized, preferably as a central generally U-shaped section 11, while the design skirt 10 that is integrally attached to bumper facia 9 so as to overlie the top of support structure 16, is produced in a large infinite-like variety of shapes. Bumper 8 also includes an energy absorbing foam structure 28 inside the standardized, generally U-shaped section 11 of facia 9 and between the face of facia 9 and support structure 16. The inner flanges 30 of support structure 16 that form channels 24 preferably have serrated inner surfaces or sawteeth 32 that engage the foam structure 28 to hold it in place even in the absence of bumper facia 9 as shown in figure 8. See also figures 4 and 5 which are a perspective front view of the bumper shown in figure 1 with parts removed to show construction detail and a sectional view of the bumper shown in figure 1 with the section being taken through one of the mounting brackets, respectively.

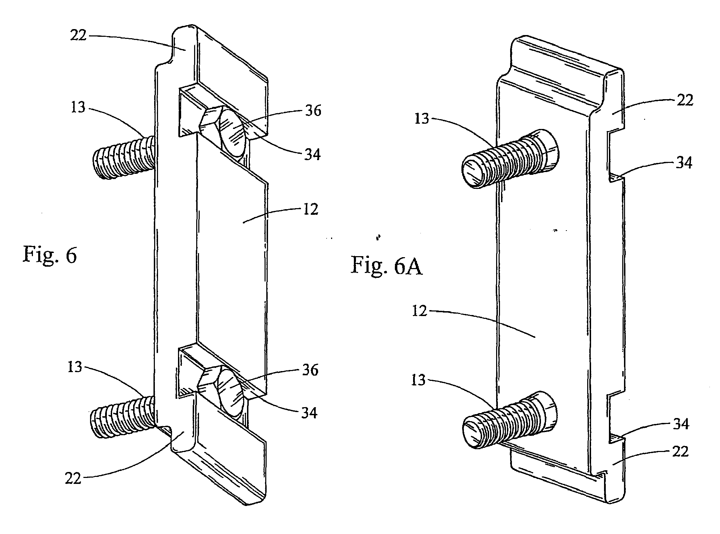

Figures 6 and 6A are perspective views of one of the mounting brackets 12. These can be made as an aluminum casting. However, the brackets 12 are preferably made more economically as an aluminum extrusion, cut-to-length. Another advantage of using aluminum extrusions cut-to-length is that the bracket can be made as long as needed to serve as a secondary back-up structure. Brackets 12 have holes for mounting bolts 13 and preferably include slots 34 for holding the hexagonal heads 36 of the mounting bolts 13 against rotation when nuts (not shown) are screwed onto the bolts 13 to mount the bumper 8 to the bus or other commercial vehicle (not shown).

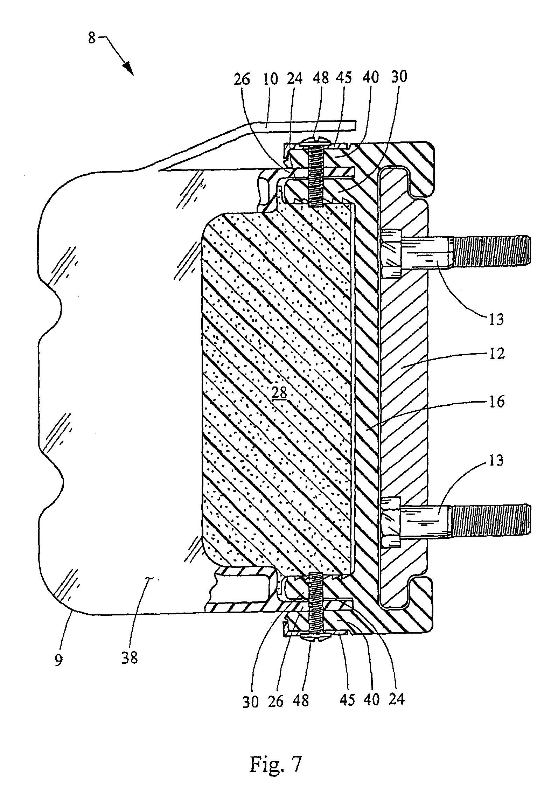

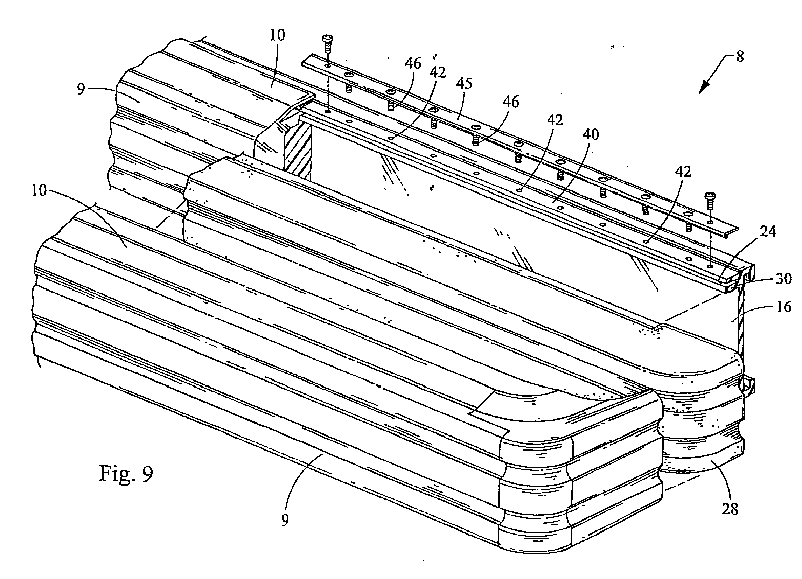

Figure 7 is a cross section taken through the middle of the bumper when facia 9 is made in two pieces to show the inner wall 38 of a typical facia half. See also figures 4 and 9.

Referring now to figures 5, 7, 9 and 10, a preferred attachment of facia 9 to support 11 will be explained in detail. Figure 9 which is a partial, exploded, perspective front view of the bumper 8 of figure 1 is shown in a preferred configuration where facia 9 and foam structure 28 are fabricated in half sections. The right hand sections of facia 9 and foam structure 28 are exploded away to explain the attachment of right hand facia 9 to support structure 16 but it is to be understood that the left hand facia is attached to support structure 16 in exactly the same way. As indicated above, support structure 16 has vertically spaced, horizontally oriented parallel channels 24 that receive rearward end portions 26 of the generally U-shaped section 11 of bumper facia 9. Channels 24 are formed by inner flanges 30 and outer flanges 40 of support structure 16 as best shown in figure 7. End portions 26 and flanges 30 and 40 have matching sets of longitudinally spaced holes 42, 43 and 44 (figure 5) that cooperate with an attachment strip or bar 45 that carries a plurality of depending pins 46 (figure 9). Pins 46 extend through the matching sets of longitudinally aligned holes 42, 43 and 44 (figure 5) when attachment bar 45 is fastened to support structure 16. Attachment bar 45 is fastened to support structure 16 by suitable fasteners 48, such as machine screws (figures 7, 9 and 10). Attachment bar 45 is preferably totally hidden by skirt 10. Skirt 10 is preferably flexible enough to provide access to fasteners 48 for detachment and replacement of facia 9. However, in some instances it may be desirable or necessary to provide optional access holes 50 in skirt 10 as shown in figure 5.

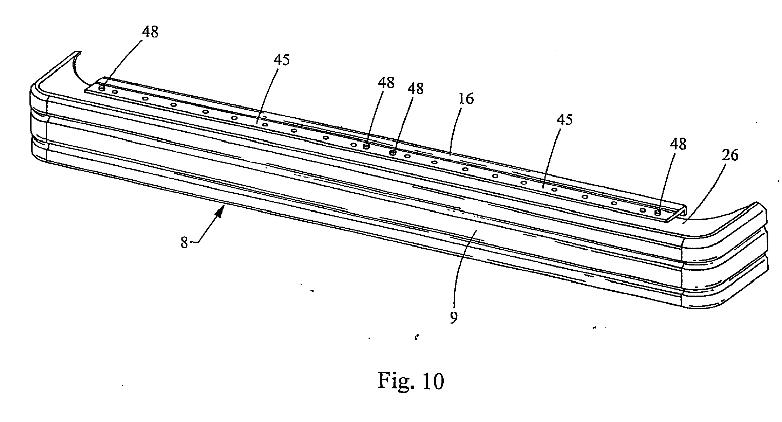

Figure 10 is a perspective front view of the bumper shown in figure 1 with the design skirt removed to show attachment details.

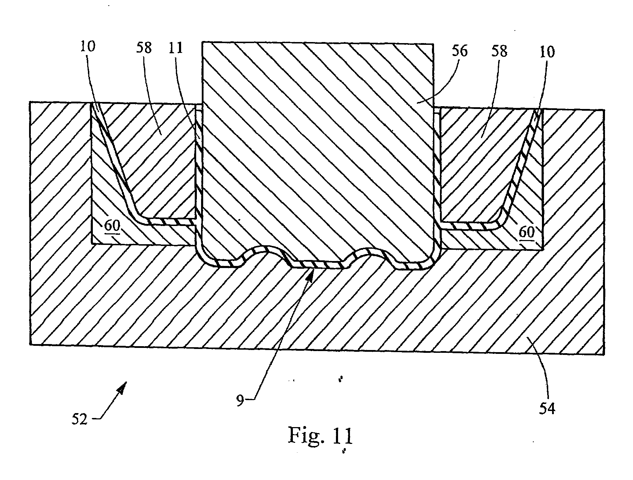

Figure 11 is a schematic cross section view of a tool to mold facia 9 with a large, infinite-like variety of skirts 10. Tool 52 comprises a stationery cavity piece 54 and a moveable core piece 56 that fits into the cavity piece 54 to mold the central U-shaped section 11 of bumper facia 9. Skirts 10 are integrally molded to bumper facia 9 by upper and lower mold inserts 58 and 60. Lower inserts 60 in effect form part of the stationery cavity piece 54 while upper inserts 58 in effect form part of moveable core piece 56. The large, almost infinite number of bumper designs are formed simply by changing inserts 58 and 60.

While facia 9 is illustrated as having an upper styling skirt 10, facia 9 may be provided with a lower styling skirt or with both an upper and a lower styling skirt as shown in figure 11. Moreover, the skirt or skirts 10 can be made in a large range of heights and may each may even exceed the height of the standardized U-shaped section 11 of facia 9 with the standardized facia section having sufficient height to house a foam insert that meets Federal or other impact standards.

## Claims

1. An energy absorbing bumper (8) having a support structure (16), brackets (12) for attaching the support structure to a bus or commercial vehicle or the like, a facia (9) attached to the support structure, and an energy absorbing structure (28) disposed between the support structure and the facia, wherein the facia has significant variations in size, shape, and other aspects relating to styling and appearance.

2. The bumper of claim 1 wherein the facia (9) is produced from specially designed tooling (52) that accommodates significant variations in size, shape, and other aspects relating to styling and appearance, without a need to completely re-design and re-tool each variation.

3. The bumper of claim 1 or 2 where the facia (9) has a section (11) and at least one skirt (10) that is integrally attached to the section whereby, the facia may be varied in size, shape, and other aspects relating to styling and appearance.

4. The bumper of claim 3, wherein the section (11) is generally U-shaped and the energy absorbing structure (28) is disposed inside the section.

5. The bumper of any of the preceding claims, wherein the bumper includes an attachment bar (45) for fastening the facia (9) to the support structure (16).

6. The bumper of claim 5, wherein the facia (9) and the support structure (16) have matching sets of holes and the attachment bar (45) has depending pins (46) disposed in the matching sets of holes to fasten the facia to the support structure (16).

7. The bumper of claim 5 or 6 wherein the attachment bar (45) is at least partially hidden by the skirt (10).

8. The bumper of any of the preceding claims, wherein the bumper has a plurality of mounting brackets (12) that are slidably attached to the support structure.
